# EUROPÄISCHE PATENTANMELDUNG

(11) **EP 2 031 311 A2**
(43) Veröffentlichungstag der Anmeldung: **04.03.2009**
(21) Anmeldenummer: 08014951.1
(22) Anmeldetag: 23.08.2008
(51) Int. Cl.: F24D 3/08, F24D 19/10

(54) **Heizungs- und /oder Warmwasserbereitungssystem**

(30) Priorität: 01.09.2007 DE 102007041672
(71) Anmelder: Robert Bosch GmbH, 70442 Stuttgart (DE)
(72) Erfinder: Kosok, Jürgen, 48565 Steinfurt (DE)

(57) **Zusammenfassung**

Die Erfindung betrifft ein Heizungs- und/oder Warmwasserbereitungssystem, bestehend aus einem Heizgerät (2) mit einer Brennereinheit (3), mindestens einem daran angeschlossenen Heizkreislauf (4), sowie einem daran angeschlossenen, über einen Wärmeübertrager (5) zu beladenden Warmwasserspeicher (6). Dabei ist ein Umschaltventil (9) zwischen Heizung und Warmwasserbereitung vorgesehen. Weiterhin sind ein insbesondere solar beheizter Pufferspeicher (1) sowie eine zwischen Umschaltventil (9) und Brennereinheit (3) in der Rücklaufleitung (10) angeordnete Pumpe (11) vorhanden.

Der Erfindung liegt die Aufgabe zu Grunde, die Einbindung von weiteren, insbesondere regenerativen Wärmequellen in ein Heizungs- und/oder Warmwasserbereitungssystem zu vereinfachen und die Kombination mit fossil befeuerten Heizgeräten (2) zu optimieren.

Gekennzeichnet ist das erfindungsgemäße Heizungs- und/oder Warmwasserbereitungssystem dadurch, dass in der Rücklaufleitung (10) zur Brennereinheit (3) ein Drei-Wege-Umschaltventil (16) angeordnet ist, um zwischen einer direkten Durchströmung der Brennereinheit (3) und einer Durchströmung des Pufferspeichers (1) umzuschalten, und dass stromabwärts vor der Brennereinheit (3) eine Vorlaufleitung (18) aus dem Pufferspeicher (1) einmündet.

## Beschreibung

Die Erfindung betrifft ein Heizungs- und/oder Warmwasserbereitungssystem nach dem Oberbegriff des Patentanspruches 1.

Gattungsgemäße Heizungs- und/oder Warmwasserbereitungssysteme bestehen in der Regel aus einem Heizgerät mit einer Brennereinheit, mindestens einem daran angeschlossenen Heizkreislauf und einem daran angeschlossenen, über einen Wärmeübertrager zu beladenden Warmwasserspeicher. Dabei ist ein Umschaltventil zwischen Heizung und Warmwasserbereitung sowie eine zwischen Umschaltventil und Brennereinheit angeordnete Pumpe in der Rücklaufleitung vorgesehen. Es handelt sich dabei bekanntermaßen um kompakte Geräteeinheiten, vorzugsweise um Wandheizgeräte, mit einem integrierten Warmwasserspeicher. Dieser besitzt ein relativ kleines Speichervolumen und ist darauf ausgelegt, Warmwasser bei kleineren Zapfmengen möglichst schnell zur Verfügung zu stellen.

Bivalente Heizungs- und Warmwasserbereitungsanlagen sind allgemein bekannt. Damit sollen verstärkt regenerative Energien genutzt und fossile Brennstoffe eingespart werden. Beispielsweise gibt es solar beheizte Pufferspeicher, welche hydraulisch und regeltechnisch an ein zugeordnetes Heizgerät angeschlossen bzw. darauf abgestimmt sind und zur Vorwärmung des Heizwassers dienen. Dies erfordert allerdings meistens einen erheblichen anlagentechnischen Aufwand, wie zum Beispiel bekannte Pufferspeicheranordnungen zeigen, bei denen mit einem Regler der Betrieb der Pumpen auf beiden Seiten eines zwischengeschalteten Wärmeübertragers gemäß den Messwerten von Temperaturfühlern gesteuert wird.

Der Erfindung liegt daher die Aufgabe zu Grunde, die Einbindung von weiteren, insbesondere regenerativen Wärmequellen in ein Heizungs- und/oder Warmwasserbereitungssystem zu vereinfachen und die Kombination mit fossil befeuerten Heizgeräten zu optimieren.

Erfindungsgemäß wird dies mit den Merkmalen des Patentanspruches 1 gelöst. Vorteilhafte Weiterbildungen sind den Unteransprüchen zu entnehmen.

Das Heizungs- und/oder Warmwasserbereitungssystem ist dadurch gekennzeichnet, dass in der Rücklaufleitung zur Brennereinheit ein Drei-Wege-Umschaltventil angeordnet ist, um zwischen einer direkten Durchströmung der Brennereinheit und einer Durchströmung des Pufferspeichers umzuschalten. Stromabwärts vor der Brennereinheit mündet dabei eine Vorlaufleitung aus dem Pufferspeicher ein.

In der Vorlaufleitung aus dem Pufferspeicher ist ein Vormischventil angeordnet und von diesem ausgehend zweigt eine Kurzschlussleitung zur Rücklaufleitung in den Pufferspeicher ab. Mit dem Vormischventil, welches als Regler mit oder ohne Hilfsenergie ausgebildet sein kann, wird die Vorlauftemperatur auf vorzugsweise 65°C begrenzt.

Wenn das Heizgerät ohne Pufferspeicher und ohne Drei-Wege-Umschaltventil betrieben wird, ist im Heizgerät eine Brücke in der Rücklaufleitung zur Brennereinheit eingebaut. So ist es auch im Nachrüstfall sehr einfach, die Anbildung an einen Pufferspeicher durch Ersetzen der Brücke durch eine andere Rohr-Baugruppe vorzunehmen, welche das Drei-Wege-Umschaltventil und den Anschluss für die Vorlaufleitung aus dem Pufferspeicher enthält. Erweiterungen an der Systemtechnik im Hinblick auf Einspeisung von weiteren Heizwasser-Volumenströmen werden somit immer an der gleichen, vorbereiteten Stelle am Heizgerät vorgenommen.

Weiterhin ist im Pufferspeicher eine Vorrichtung zur temperaturabhängigen Einschichtung von Rücklaufwasser vorhanden, in welche die Rücklaufleitung einmündet. Es wird damit sichergestellt, dass die vertikale Temperaturschichtung im Speicherbehälter durch die Rücklaufströmung nicht zerstört wird.

Die Brennerleistung wird in Abhängigkeit von der Temperatur im Pufferspeicher oder der Vorlauftemperatur aus dem Pufferspeicher moduliert. Damit wird die Brennerleistung indirekt an den Wärmeeintrag aus anderen Wärmequellen, insbesondere aus einer Solaranlage, angepasst. Bei ausreichender Temperatur im Pufferspeicher oder bei ausreichender Vorlauftemperatur aus dem Pufferspeicher erfolgt kein Brennerstart. Das Heizgerät und/oder die Brennereinheit wird somit direkt durchströmt, wenn damit die Solltemperatur für die Versorgung eines Wärmeverbrauchers erreicht und sichergestellt werden kann. Bei Erfassung größerer Zapfraten über einen festlegbaren Zeitraum, also bei Überschreitung entsprechend festlegbarer Grenzwerte, schaltet das Umschaltventil am Heizgerät auf Warmwasserbereitung um. Nach Aktivierung der Warmwasserbereitung erfolgt eine Steuerung über Temperatursensoren und damit ein Übersteuern der Temperatursteuerung der Warmwasserbereitung.

Weiterhin schaltet das Umschaltventil am Heizgerät beim Erreichen eines Grenzwertes für die Zapfrate und/oder eines Grenzwertes für die minimale Temperatur im Pufferspeicher und/oder bei nicht ausreichender Vorlauftemperatur aus dem Pufferspeicher auf Warmwasserbereitung um. Die Pumpe des Heizgerätes geht dann in Betrieb, um den Pufferspeicher auf eine festlegbare Bereitschaftstemperatur zu bringen. Bei erfolgter Umschaltung auf Warmwasserbereitung und laufender Pumpe des Heizgerätes zum Laden des Pufferspeichers auf eine festlegbare Bereitschaftstemperatur, bleibt mindestens eine sekundärseitige Pumpe, beispielsweise die Pumpe im Heizkreislauf, zunächst ausgeschaltet. Diese wird erst dann zugeschaltet, wenn das Temperaturniveau im Pufferspeicher ausreicht, um zumindest unterstützend zur Versorgung der Warmwasserbereitung beizutragen.

Mit der Erfindung steht ein einfaches Heizungs- und/oder Warmwasserbereitungssystem zur Verfügung, mit dem insbesondere in Verbindung mit einem solar beheizten Pufferspeicher die Warmwasserbereitung im Durchfluss optimiert wird. Insgesamt ist der Systemaufbau einfach, denn die gesamte Systemtechnik kommt erfindungsgemäß mit einer geringen Anzahl an Bauteilen und Sensoren aus. Dadurch wird eine hohe Robustheit erreicht. Zudem können alle Bauteile in einer werksseitig vormontierten Einheit untergebracht werden, welche dann im Nachrüstfall statt der Brücke an das Heizgerät angeschlossen wird.

Die erfindungsgemäße Anlagentechnik bietet den Vorteil, dass über den Pufferspeicher als Schnittstelle viele verschiedene Wärmequellen integriert werden können, ohne dass am Heizgerät hydraulische sowie regeltechnische Einstellungen vorgenommen werden müssen. In einer kompakten Bauform ist somit das System auf mögliche Erweiterungen im Hinblick auf die Nutzung von nichtfossilen Brennstoffen bzw. Wärmequellen vorbereitet. Die Temperaturschwelle zum Eintrag von Wärme in den Pufferspeicher wird tief gehalten, so dass alle angeschlossenen Wärmequellen mit einem relativ kleinen Temperaturniveau starten können und dass die Speicherkapazität gut ausgenutzt wird.

Die Temperaturbegrenzung auf 65°C am Austritt des Pufferspeichers vereinfacht die nachfolgende Temperaturregelung für die Warmwasserbereitung und reduziert Wärmeverluste in Rohrleitungen.

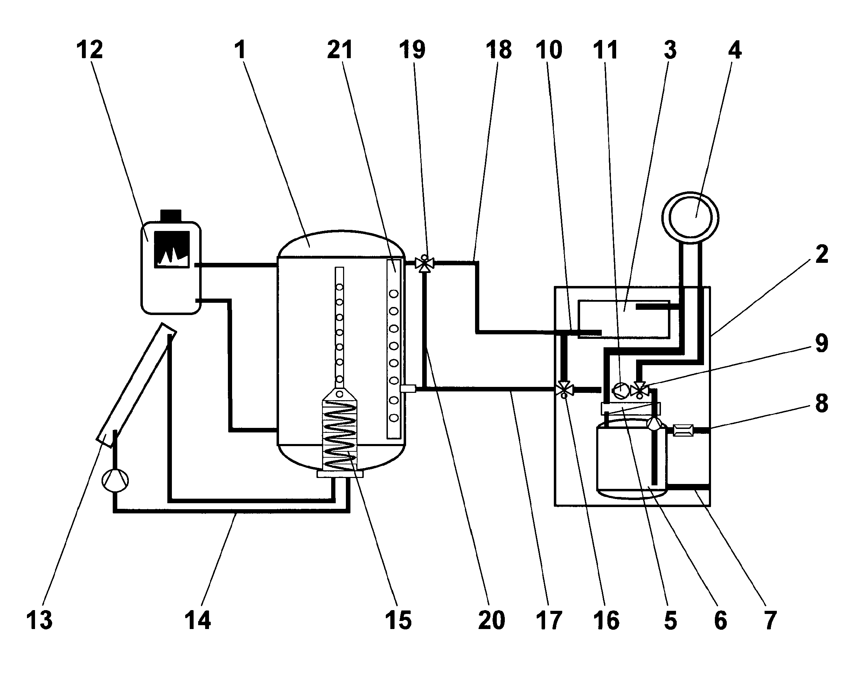

Die Zeichnung stellt ein Ausführungsbeispiel der Erfindung dar und zeigt in einer einzigen Figur den schematischen Aufbau eines Heizungs- und/oder Warmwasserbereitungssystems.

Das Heizungs- und/oder Warmwasserbereitungssystem besteht im Wesentlichen aus einem Pufferspeicher 1 und einem Heizgerät 2. Dieses besitzt eine Brennereinheit 3, einen daran angeschlossenen Heizkreislauf 4, und einen angeschlossenen, über einen Wärmeübertrager 5 zu beladenden Warmwasserspeicher 6 mit Kaltwasser-Zulaufleitung 7 und Warmwasser-Entnahmeleitung 8. Dabei ist ein Umschaltventil 9 zwischen Heizungs- und Warmwasserbereitungsbetrieb vorgesehen und zwischen Umschaltventil 9 und Brennereinheit 3 befindet sich in der Rücklaufleitung 10 eine Pumpe 11. Der Pufferspeicher 1 wird von einer Feststoff-Feuerungseinrichtung 12 und einer Solaranlage, bestehend aus Sonnenkollektor 13, Solarkreislauf 14 und Solar-Wärmetauscher 15, beheizt.

In der Rücklaufleitung 10 zur Brennereinheit 3 ist ein Drei-Wege-Umschaltventil 16 angeordnet, um zwischen einer direkten Durchströmung der Brennereinheit 3 und einer Durchströmung des Pufferspeichers 1 umzuschalten. Dazu ist an das Drei-Wege-Umschaltventil 16 die Rücklaufleitung 17 zum Pufferspeicher 1 angeschlossen und stromabwärts vor der Brennereinheit 3 mündet die Vorlaufleitung 18 aus dem Pufferspeicher 1 ein. Weiterhin ist in die Vorlaufleitung 18 ein Vormischventil 19 eingebaut, und von diesem ausgehend zweigt eine Kurzschlussleitung 20 zur Rücklaufleitung 17 ab. Im Pufferspeicher 1 mündet die Rücklaufleitung 17 in eine Vorrichtung 21 zur temperaturabhängigen Einschichtung von Rücklaufwasser ein.

## Patentansprüche

1. Heizungs- und/oder Warmwasserbereitungssystem, bestehend aus einem Heizgerät (2) mit einer Brennereinheit (3), mindestens einem daran angeschlossenen Heizkreislauf (4), einem daran angeschlossenen, über einen Wärmeübertrager (5) zu beladenden Warmwasserspeicher (6), wobei ein Umschaltventil (9) zwischen Heizung und Warmwasserbereitung vorgesehen ist, einem insbesondere solar beheizten Pufferspeicher (1) sowie einer zwischen Umschaltventil (9) und Brennereinheit (3) in der Rücklaufleitung (10) angeordneten Pumpe (11),
**dadurch gekennzeichnet, dass** in der Rücklaufleitung (10) zur Brennereinheit (3) ein Drei-Wege-Umschaltventil (16) angeordnet ist, um zwischen einer direkten Durchströmung der Brennereinheit (3) und einer Durchströmung des Pufferspeichers (1) umzuschalten, und dass stromabwärts vor der Brennereinheit (3) eine Vorlaufleitung (18) aus dem Pufferspeicher (1) einmündet.

2. Heizungs- und/oder Warmwasserbereitungssystem nach Anspruch 1,
**dadurch gekennzeichnet, dass** in der Vorlaufleitung (18) aus dem Pufferspeicher (1) ein Vormischventil (19) angeordnet ist und dass von diesem ausgehend eine Kurzschlussleitung (20) zur Rücklaufleitung (17) in den Pufferspeicher (1) abzweigt.

3. Heizungs- und/oder Warmwasserbereitungssystem nach Anspruch 1 oder 2,
**dadurch gekennzeichnet, dass** mit dem Vormischventil (19) in der Vorlaufleitung (18) aus dem Pufferspeicher (1) die Vorlauftemperatur auf vorzugsweise 65°C begrenzt wird.

4. Heizungs- und/oder Warmwasserbereitungssystem nach einem der Ansprüche 1 bis 3,
**dadurch gekennzeichnet, dass** im Heizgerät (2) eine Brücke in der Rücklaufleitung (10) zur Brennereinheit (3) eingebaut ist, wenn das Heizgerät (2) ohne Pufferspeicher (1) und ohne Drei-Wege-Umschaltventil (16) betrieben wird.

5. Heizungs- und/oder Warmwasserbereitungssystem nach einem der Ansprüche 1 bis 4,
**dadurch gekennzeichnet, dass** im Pufferspeicher (1) eine Vorrichtung (21) zur temperaturabhängigen Einschichtung von Rücklaufwasser nachgeschaltet ist, und dass die Rücklaufleitung (17) in diese einmündet.

6. Heizungs- und/oder Warmwasserbereitungssystem nach einem der Ansprüche 1 bis 5,
**dadurch gekennzeichnet, dass** die Brennerleistung in Abhängigkeit von der Temperatur im Pufferspeicher (1) oder der Vorlauftemperatur aus dem Pufferspeicher (1) moduliert wird, wobei damit die Brennerleistung indirekt an den Wärmeeintrag aus anderen Wärmequellen, insbesondere aus einer Solaranlage, angepasst wird.

7. Heizungs- und/oder Warmwasserbereitungssystem nach einem der Ansprüche 1 bis 6,
**dadurch gekennzeichnet, dass** bei ausreichender Temperatur im Pufferspeicher (1) oder bei ausreichender Vorlauftemperatur aus dem Pufferspeicher (1) kein Brennerstart und eine direkte Durchströmung des Heizgerätes (2) und/oder der Brennereinheit (3) erfolgt, wenn damit die Solltemperatur eines Wärmeverbrauchers erreicht und sichergestellt werden kann.

8. Heizungs- und/oder Warmwasserbereitungssystem nach einem der Ansprüche 1 bis 7,
**dadurch gekennzeichnet, dass** bei Erfassung größerer Zapfraten über einen festlegbaren Zeitraum, bei Überschreitung entsprechender festlegbarer Grenzwerte, das Umschaltventil (9) am Heizgerät (1) auf Warmwasserbereitung umschaltet und dass nach Aktivierung der Warmwasserbereitung eine Steuerung über Temperatursensoren und damit ein Übersteuern der Temperatursteuerung der Warmwasserbereitung erfolgt.

9. Heizungs- und/oder Warmwasserbereitungssystem nach einem der Ansprüche 1 bis 8,
**dadurch gekennzeichnet, dass** das Umschaltventil (9) am Heizgerät (2) beim Erreichen eines Grenzwertes für die Zapfrate und/oder eines Grenzwertes für die minimale Temperatur im Pufferspeicher (1) und/oder bei nicht ausreichender Vorlauftemperatur aus dem Pufferspeicher (1) auf Warmwasserbereitung umschaltet und die Pumpe (11) des Heizgerätes (2) in Betrieb geht, um den Pufferspeicher (1) auf eine festlegbare Bereitschaftstemperatur zu bringen.

10. Heizungs- und/oder Warmwasserbereitungssystem nach einem der Ansprüche 1 bis 9,
**dadurch gekennzeichnet, dass** bei erfolgter Umschaltung auf Warmwasserbereitung und laufender Pumpe (11) des Heizgerätes (2), um den Pufferspeicher (1) auf eine festlegbare Bereitschaftstemperatur zu bringen, mindestens eine sekundärseitige Pumpe zunächst ausgeschaltet bleibt und erst dann zugeschaltet wird, wenn das Temperaturniveau im Pufferspeicher (1) ausreicht, um zumindest unterstützend zur Versorgung der Warmwasserbereitung beizutragen.
